**Europäisches Patentamt**

(19) **European Patent Office**

**Office européen des brevets**

(11) Numéro de publication: **0 253 725**
**B1**

(12) **FASCICULE DE BREVET EUROPEEN**

(45) Date de publication du fascicule du brevet:
**27.12.90**

(21) Numéro de dépôt: **87401634.8**

(22) Date de dépôt: **10.07.87**

(51) Int. Cl.⁵: **B62D 13/02**

(54) Dispositif de braquage pour semi-rémorque à deux essieux directeurs.

(30) Priorité: **16.07.86 IT 519086**

(43) Date de publication de la demande:
**20.01.88 Bulletin 88/3**

(45) Mention de la délivrance du brevet:
**27.12.90 Bulletin 90/52**

(84) Etats contractants désignés:
**AT BE CH DE ES FR GB GR IT LI LU NL SE**

(56) Documents cités:
**EP-A- 0 043 628**
**DE-A- 2 328 276**
**DE-B- 2 333 591**
**US-A- 2 797 106**
**US-A- 3 149 858**

(73) Titulaire: **S.I.O-SOCIETA PER L'INDUSTRIA DELL'OSSIGENO E DI ALTRI GAS, Via Capecelatro 69, I-20148 Milan(IT)**

(72) Inventeur: **Rosati, Graziano, Via Novara no 31, Milan(IT)**

(74) Mandataire: **Vesin, Jacques et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07(FR)**

ACTORUM AG

## Description

La présente invention est relative à un dispositif de braquage pour une semi-remorque ayant deux essieux directeurs, tel que défini dans le préambule de la revendication 1 et connu par example du document US-A 2 797 106.

La plupart des systèmes de braquage actuellement connus pour les essieux des semi-remorques ne permettent pas d'effectuer des manoeuvres vraiment serrées de marche en avant ou de marche en arrière, ni de se déplacer dans des espaces étroits ou de passer dans des rues étroites possédant des virages à rayon réduit, à cause de l'impossibilité de réduire, au-delà d'une certaine limite, l'encombrement de la semi-remorque dans les virages.

L'invention a pour but de fournir un dispositif de braquage ayant une manoeuvrabilité accrue, avec un angle de braquage maximal, et permettant de raccourcir au maximum la longueur totale du véhicule.

A cet effet, l'invention a pour object un dispositif de braquage tel que décrit dans la partie caractérisante de la revendication unique.

Le dispositif de braquage suivant l'invention permet le recul du point d'application de la commande de braquage sur le tracteur et, dans certains cas limites et en marche-arrière, le positionnement de la semi-remorque à 90° environ par rapport à l'axe longitudinal du tracteur.

Un exemple de réalisation de l'invention va maintenant être décrit en se référant aux desins annexés, dans lesquels :

- les figures 1 et 2 représentent schématiquement, respectivement en vue e dessus avec arrachement et en vue latérale, un véhicule à semi-remorque à deux essieux directeurs muni d'un dispositif de braquage conforme à l'invention ; et
- la figure 3 représente schématiquement en vue en plan, à plus grande échelle, le dispositif de braquage du véhicule des figures 1 et 2.

Sur les dessins est indiqué par 1 un tracteur auquel est ancrée par un attelage à butée 2 une semi-remorque 3 à deux essieux directeurs, à savoir un essieu avant 4 et un essieu arrière 5, destinés à supporter un réservoir ou citerne 6. Cette dernière peut contenir un liquide cryogénique ou être utilisée pour n'importe quel autre genre de transport, en particulier celui des produits chimiques liquides et/ou gazeux.

Le tracteur 1 peut être dérivé d'un véhicule de série adéquat comme par exemple le tracteur IVECO/FIAT 190.33 T, par :
- le raccourcissement de l'empattement ;
- l'évidement de la paroi arrière de la cabine de conduite 21, afin de permettre l'insertion dans cet évidement de la partie avant bombée du réservoir 6 et, par suite, de raccourcir la longueur hors tout du véhicule ; et
- l'élimination de la butée classique à pivot et son remplacement par une butée à tour complet de billes soutenue par un petit châssis de support 22.

La semi-remorque 3 comprend des longerons en tôle 3' ayant une section en "V", formant berceau et dotés d'appuis longitudinaux prééquipés pour leur soudure à l'enveloppe extérieure du réservoir cryogénique 6. Ceci permet un abaissement remarquable du centre de gravité du véhicule.

La semi-remorque 3 est par aiileurs dotée de suspensions 20 à fonctionnement pneumatique, avec des alvéoles de nivellement et de distribution de la pression sur les deux essieux 4, 5 de la semi-remorque pour une répartition correcte et constante du chargement sur les essieux, même en présence de dénivellations de la route. Ces suspensions pneumatiques réalisent aussi la fonction de tenue transversale du véhicule dans les virages.

Les groupes de suspension des deux essieux 4, 5 sont montés sur deux chariots spéciaux respectifs 24, 25 (type train-avant) dotés de barres rigides pour l'ancrage des essieux à une butée correspondante à tour complet de billes 26,27.

Une caractéristique particulière du montage des chariots 24,25 est que le centre de la butée est légèrement déplacé vers l'avant (60 mm environ) par rapport à l'essieu correspondant, ce qui confère aux essieux un comportement auto-suiveur en ligne de marche longitudinale normale de la semi-remorque et contribue ainsi à l'allègement de l'effort de la barre de commande de direction.

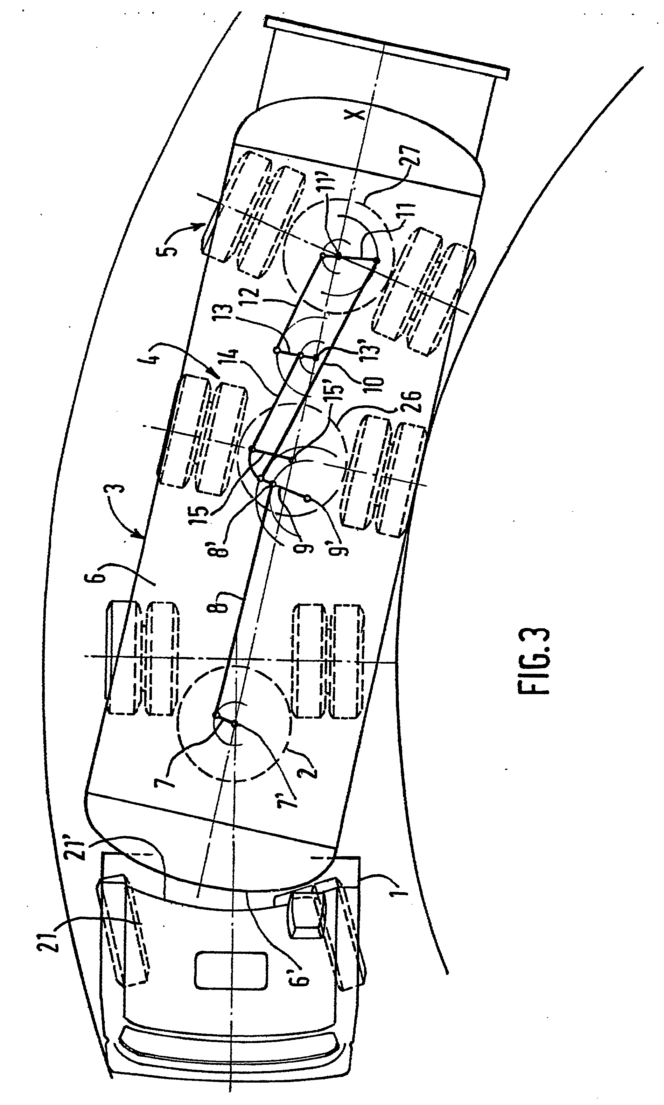

Le tracteur et la semi-remorque qui composent le poids-lourd sont constamment reliés entre eux par la butée 2. Ce n'est que pour des contrôles exceptionnels que l'on pourra décrocher la semi-remorque du tracteur, en desserrant les boulons qui relient les supports de la butée 2 à la plate-forme du tracteur. En tout cas, la semi-remorque possède des dimensions réduites d'encombrement en longueur, et son encombrement dans les virages, représentés par deux cercles à la figure 3, est inférieur à celui d'un camion normal à trois essieux. L'encombrement est encore réduit par le fait que la paroi arrière 21' de la cabine 21 du tracteur est évidée, l'avant bombé 6' de la citerne 6 pénétrant dans cet évidement.

Suivant la réalisation représentée à la Figure 3, le dispositif de braquage des essieux avant et arrière 4, 5 de la semi-remorque 3 comprend un levier de commande 7 solidaire de la plate-forme du tracteur 1, ayant son point d'appui en 7', dans le centre de la butée 2 du tracteur, et articulé, à son extrémité, à une extrémité d'un premier tirant 8. Ce tirant 8 s'étend vers l'arrière, où il s'articule en 8' à la partie intermédiaire d'un premier levier de renvoi 9 ayant son point d'appui 9' décalé par rapport à l'axe longitudinal X de la semi-remorque 3 et, également, décalé vers l'avant par rapport au centre de la butée 26 du premier essieu 4. A l'extrémité libre de ce levier de renvoi 9 s'articule une extrémité d'un second tirant 10 qui s'étend vers l'arrière et dont l'extrémité opposée s'articule sur un premier levier de braquage 11 solidaire de l'essieu arrière 5 et dont la partie intermédiaire possède son point d'appui en 11' au centre de la butée 27 de ce second essieu.

L'extrémité du levier de braquage 11 opposée à celle articulée au tirant 10, s'articule à un troisième tirant 12 qui s'étend vers l'avant pour s'articuler à l'extrémité d'un second levier de renvoi 13 ayant son point d'appui 13' situé sur l'axe longitudinal de la semi-remorque et en position médiane entre les centres des butées 26 et 27 des deux essieux directeurs 4 et 5.

Sur la partie intermédiaire du second levier de renvoi 13 s'articule une extrémité d'un quatrième et dernier tirant 14 qui s'étend encore vers l'avant et s'articule par son extrémité opposée sur un second levier de braquage 15 solidaire de l'essieu avant 4 et ayant son point d'appui 15' au centre de la butée 26 de cet essieu avant.

En vue en plan, les leviers 7, 9, 11 et 15 s'inscrivent dans les limites des butées 2, 26 et 27, et le levier 13 a une longueur du même ordre que le levier 15. Les leviers 7, 13 et 15 se trouvent d'un même côté de l'axe X, et les leviers 9 et 11 s'étendent de part et d'autre de cet axe. Ainsi, l'ensemble de la timonerie 7 à 15 s'étend au voisinage de l'axe X.

Les leviers 7, 9, 11, 13 et 15 possèdent des bras opportunément calculés et se raccordent aux tirants 8, 10, 12 et 14, qui sont rigides et par conséqent inextensibles, par l'intermédiaire de joints sphériques, pour former un ensemble articulé permettant le braquage des essieux 4 et 5 de la semi-remorque 4 en partant de la butée 2 ou de la plate-forme du tracteur.

En effet, à chaque mouvement de la butée 2 ou de la plate-forme à la suite du braquage du tracteur, correspond un déplacement angulaire du levier du commande 7 et, par l'intermédiaire de la timonerie décrite ci-dessus, des déplacements du premier levier de braquage 11 et, ensuite, du second levier de braquage 15, pour braquer l'essieu arrière 5 et, de là, l'essieu avant 4 de la semi-remorque à la suite de la commande provenant du levier 7, et par conséquent en fonction du rayon de braquage du tracteur.

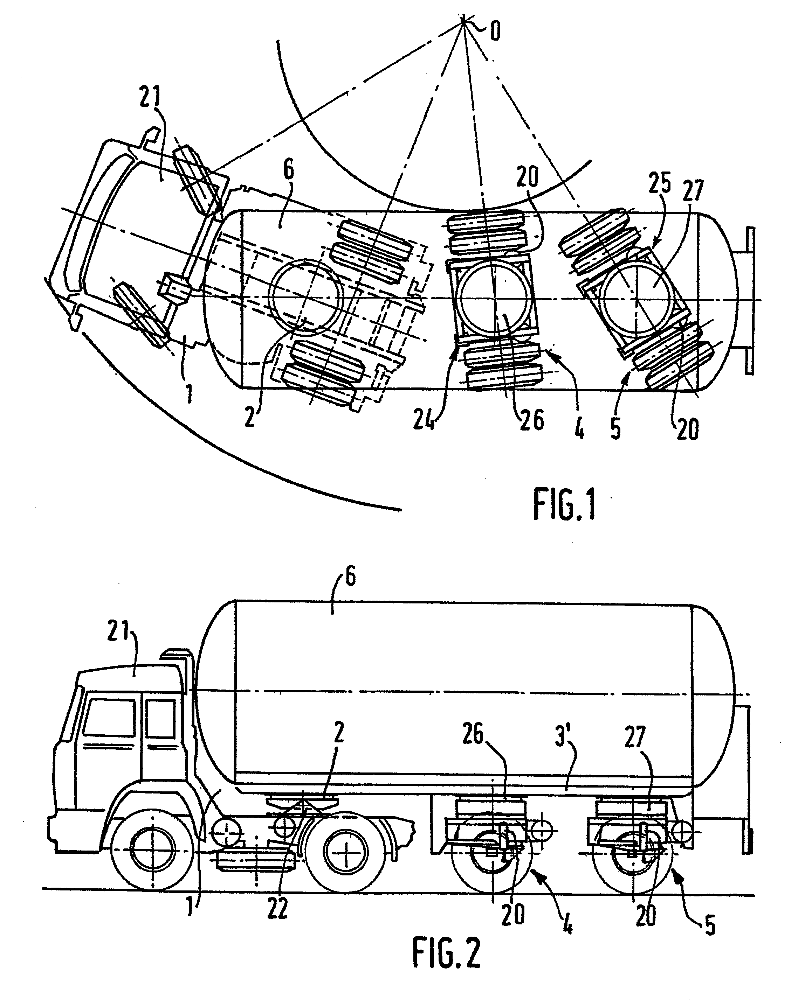

Comme on le voit à la figure 1, le dispositif ainsi conçu détermine dans les virages l'orientation des essieux de la semi-remorque vers le centre idéal et instantané O du virage défini par l'intersection des orientations des essieux du tracteur jusqu'au braquage nominal maximum du tracteur.

On comprend que le dispositif de braquage suivant l'invention peut être appliqué à d'autres semi-remorques, à citerne ou à plateau, destinées à tous types de transports.

**Revendications**

Dispositif de braquage pour une semi-remorque (3) attelée sur un tracteur (1) à deux roues directrices et essieu arrière, ladite semi-remorque ayant deux essieux directeurs, un essieu avant (4) et un essieu arrière (5), du genre comprenant une suite de leviers (7, 9, 11, 13, 15) et de tirants articulés (8, 10, 12, 14) pour transmettre, à partir d'un levier de commande (7) solidaire du châssis d'ancrage de la butée (2) du tracteur, la commande de braquage de l'essieu arrière (5) et de l'essieu avant (4) de la semi-remorque (3) suivant l'angle longitudinal de braquage du tracteur, la timonerie de commande de braquage de l'essieu arrière s'étendant dans la région de l'axe (X) de la semi-remorque (3), caractérisé par la combinaison des mesures suivantes:

a) un premier tirant (8) s'étend librement d'un seul tenant du levier de commande (7) à un premier levier de renvoi (9) articulé à excentrement en (9');

b) un second tirant (10) s'étend librement d'un seul tenant jusqu'à un levier de braquage (11) articulé au centre de pivotement (11') de l'essieu arrière de la semi-remorque;

c) ce levier de braquage (11) est relié par un troisième tirant (12) à un levier démultiplicateur intermédiaire (13) articulé sur la semi-remorque en un point axial (13');

d) ce levier intermédiaire (13) est relié à un quatrième tirant (14) de commande d'un second levier de braquage (15) de l'essieu avant (4), articulé au centre de pivotement (15') dudit essieu (4);

e) le tout étant dimensionné pour qu'à tout angle de braquage des roues directrices du tracteur (1), il s'ensuive des angles de braquage des essieux avant (4) et arrière (5) de la semi-remorque, qui font converger les axes des roues des dits essieux avant (4) et arrière (5) de la semi-remorque au point de convergence (0) des axes de roues directrices et de l'essieu du tracteur (1).

**Patentansprüche**

1. Lenkeinschlagvorrichtung für einen Sattelauflieger (3), der an eine Zugmaschine (1) mit zwei gelenkten Rädern und Hinterachse angekuppelt ist. Der Sattelauflieger besitzt Lenkachsen, eine Vorderachse (4) und eine Hinterachse (5), mit einer Reihe von Hebeln (7, 9, 11, 13, 15) und gelenkig gelagerten Zugstangen (8, 10, 12, 14), um über einen mit dem Fahrgestell zur Verankerung des Anschlags (2) der Zumaschine kraftschlüssig verbundenen Betätigungshebel (7) den Lenkeinschlagmechanismus der Hinterachse (5) und der Vorderachse (4) des Sattelaufliegers (3) entsprechend dem Längseinschlagwinkel der Zugmaschine zu übertragen, wobei das Gestänge des Lenkeinschlagmechanismus der Hinterachse bis in den Bereich der Achse (X) des Sattelaufliegers (3) reicht. Die Vorrichtung ist durch folgende kombinierte Vorgänge gekennzeichnet:

a) eine erste Zugstange (8) reicht frei und ununterbrochen vom Betätigungshebel (7) bis zu einem ersten Umlenkhebel (9), der, exzentrisch verstellt, in (9') gelenkig gelagert ist;

b) eine zweite Zugstange (10) reicht frei und ununterbrochen bis zu einem Lenkeinschlaghebel (11), der gelenkig mit dem Schwenkungsmittelpunkt (11') der Hinterachse des Sattelaufliegers verbunden ist;

c) dieser Lenkeinschlaghebel (11) ist über eine dritte Zugstange (12) mit einem Untersetzungsgetriebe-Zwischenhebel (13) verbunden, der gelenkig in einem Axialpunkt des Sattelaufliegers gelagert ist;

d) dieser Zwischenhebel (13) ist mit einer vierten Zugstange (14) verbunden zur Betätigung eines zweiten Lenkeinschlaghebels (15) der Vorderachse (4), der gelenkig mit dem Schwenkungsmittelpunkt (15') der besagten Achse (4) verbunden ist;

e) diese Einheit ist dergestalt dimensioniert, daß bei jedem Einschlagwinkel der gelenkten Räder der Zugmaschine (1) Lenkeinschlagwinkel der Vorder- (4) und Hinterachse (5) des Sattelaufliegers entstehen, aufgrund derer die Achsen der Räder der besagten Vorder- (4) und Hinterachse (5) des Sattelaufliegers im Konvergenzpunkt (0) der Achse der gelenkten Räder und der Achse der Zugmaschine (1) zusammenlaufen.

## Claims

1. A steering device for a semi-trailer (3) coupled to a tractor (1) comprising two steering wheels and a rear axle, the said semi-trailer having two steering axles, being a front axle (4) and a rear axle (5), of the type comprising a train of levers (7, 9, 11, 13, 15) and of articulated tie-rods (8, 10, 12, 14) to transmit from a control lever (7) integral with the supporting framework of the coupling (2) of the tractor, the steering control of the rear axle (5) and of the front axle (4) of the semitrailer (3) according to the longitudinal steering angle of the tractor, the steering control, linkage of the rear axle extending in the region of the axis (X) of the semi-trailer (3), characterised by the combination of the following measures:

(a) a first tie-rod (8) extends freely from a single point of the control lever (7) to a first reversing lever (9) articulated eccentrically at (9');

(b) a second tie-rod (10) extends freely from a single point to a steering lever (11) articulated at the pivotal centre (11') of the rear axle of the semi-trailer;

(c) this steering lever (11) is connected via a third tie-rod (12) to an intermediate step-down lever (13) articulated on the semi-trailer at an axial point (13');

(d) this intermediate lever (13) is connected to a fourth tie-rod (14) for operation of a second steering lever (15) of the front axle (4), articulated on the pivotal centre (15') of the said axle (4);

(e) the whole being so dimensioned that any steering angle of the steering wheels of the tractor (1) brings about steering angles of the front (4) and rear (5) axles of the semi-trailer which cause the axes of the wheels of the said front and rear axles (4) and (5) of the semi-trailer to converge at the point of convergence (0) of the axes of the steering wheels and of the axle of the tractor (1).

EP 0 253 725 B1

FIG.1

FIG.2

FIG.3